# EUROPÄISCHE PATENTANMELDUNG

(11) **EP 1 502 498 A2**
(43) Veröffentlichungstag der Anmeldung: **02.02.2005**
(21) Anmeldenummer: 04017712.3
(22) Anmeldetag: 27.07.2004
(51) Int. Cl.: A01G 17/10

(54) **Seil zur Sicherung von Bäumen oder dergleichen**

(30) Priorität: 01.08.2003 DE 20311830 U; 26.01.2004 DE 102004003874
(71) Anmelder: Fabritz, Thorsten A., 47800 Krefeld (DE)
(72) Erfinder: Fabritz, Thorsten A., 47800 Krefeld (DE)

(57) **Zusammenfassung**

Das erfindungsgemäße Sicherungsseil (3) dient vorzugsweise zur Übertragung von Zugkräften zwischen einem oder mehreren Bäumen oder zur Kronensicherung, bei der mit Hilfe des erfindungsgemäßen Seiles (3) einer oder mehrere Äste (1,2) einer Baumkrone miteinander oder mit dem Stamm des Baumes verbunden werden. Die Erfindung bezweckt, auf diese Weise Bäume und/oder ihre Kronen gegen Bruch und damit ihre unmittelbare Umgebung von herabstürzenden Stämmen oder Ästen zu schützen.

Es ist bekannt, zu diesem Zweck Rund- oder Flachseile, auch in Form von Gurten aus Stahl oder textilen Werkstoffen zu verwenden. Stahlseile haben allerdings den Nachteil, dass sie bestimmte Befestigungsmittel voraussetzen; die Verankerungsbohrungen beschädigen den Baum und sind schon aus dem Grunde nachteilig. Vorteilhafter sind dagegen textile Sicherungssysteme, weil sie für das Holz beschädigungsfrei angelegt werden und dennoch erhebliche Zugkräfte übertragen können.

## Beschreibung

Die Erfindung betrifft ein Seil zur Sicherung von Bäumen oder dergleichen.

Das erfindungsgemäße Sicherungsseil dient vorzugsweise zur Übertragung von Zugkräften zwischen einem oder mehreren Bäumen oder zur Kronensicherung, bei der mit Hilfe des erfindungsgemäßen Seiles einer oder mehrere Äste einer Baumkrone miteinander oder mit dem Stamm des Baumes verbunden werden. Die Erfindung bezweckt, auf diese Weise Bäume und/oder ihre Kronen gegen Bruch und damit ihre unmittelbare Umgebung von herabstürzenden Stämmen oder Ästen zu schützen.

Es ist bekannt, zu diesem Zweck Rund- oder Flachseile, auch in Form von Gurten aus Stahl oder textilen Werkstoffen zu verwenden. Stahlseile haben allerdings den Nachteil, dass sie bestimmte Befestigungsmittel voraussetzen; die Verankerungsbohrungen beschädigen den Baum und sind schon aus dem Grunde nachteilig. Vorteilhafter sind dagegen textile Sicherungssysteme, weil sie für das Holz beschädigungsfrei angelegt werden und dennoch erhebliche Zugkräfte übertragen können.

Die Erfindung löst die Aufgabe, ein System aus Seilen zur Sicherung von Bäumen o. dgl. zu schaffen, welches jeder Zeit seine Funktionstüchtigkeit selbständig anzeigt und dadurch einen ausreichenden Schutz gegen Überlastungen verschiedenster Art gewährt.

Die erfindungsgemäße Lösung besteht in den Merkmalen des Anspruches 1. Weitere Merkmale der Erfindung sind Gegenstand der Unteransprüche.

Gemäß der Erfindung ist das Sicherungsseil, welches die Zugkraft überträgt und dadurch das Herausbrechen oder Herabstürzen einzelner Hölzer verhindert, in dem es zwischen den Hölzern Zugkräfte bis zu seiner Belastungsgrenze überträgt, durch seinen Kennfaden dagegen geschützt, dass es unvermutet bricht. Der Kennfaden wirkt nämlich spätestens bei der Zugkraftübertragung und vermöge seiner Kennung als sichtbarer Hinweis auf die Belastungsgrenze des Seils.

Die Erfindung hat daher den Vorteil, dass der einbauende Fachmann sicher und genau abzuschätzen vermag, welche potentiellen Kräfte auf seine Sicherungsseile einwirken können und sie dementsprechend dimensionieren kann. Dies kann durch eine einfache Sichtkontrolle geschehen, die an sich bekannt ist, aber häufig versagt, weil das Erreichen der Bruchlasten zu spät erkannt wird. Dies ist bei sachgerechter Anwendung der Erfindung ausgeschlossen, weil der Bruch des Kennfadens vor der Überlastung des Seils eintritt und von außen sichtbar wird, sobald er auftritt.

Die Erfindung ermöglicht deswegen auch die Feststellung anhand des Kennfadens, ob die gewählte Dimensionierung des Seiles ausreicht, d.h. richtig gewählt ist oder ob das Sicherungssystem durch vorausgehende Ereignisse bereits in gefährlichem Maße bis kurz unter seine Belastungsgrenze beansprucht worden ist, so dass die Gefahr besteht, dass es bei einem folgenden Ereignis brechen kann. Der Fachmann kann deswegen mit der Erfindung rechtzeitig reagieren und gegebenenfalls das vorhandene System gegen ein neues oder höher dimensioniertes austauschen.

Vorzugsweise und gemäß den Merkmalen des Anspruches 2 wird die gewünschte Kennung durch vorzeitigen Bruch des Kennfadens erreicht, wodurch man mit Hilfe zuverlässiger Materialkonstanten auf einfache Weise Seile der erfindungsgemäßen Art aus bekannten Werkstoffen herstellen und einsetzen kann. Dabei ist die Erkennbarkeit auch aus größerer Entfernung und bei Kronensicherungen von unten vergleichsweise einfach mit den Merkmalen des Anspruches 3 zu erreichen. Wenn sie auf dem Bruch des Kennfadens beruht, wird bei Verwirklichung der Merkmale des Anspruches 4 die bei Bruch eintretende Kennung durch das Aufspießen des Kennfadens aus dem Seilquerschnitt noch zusätzlich mechanisch verlängert.

Weitere Merkmale und andere Vorteile der Erfindung ergeben sich aus der nachfolgenden Beschreibung anhand der Figuren in den Zeichnungen. Es zeigen:
- Fig. 1: ein Hohlseil in abgebrochener Darstellung und in Draufsicht im Ausgangszustand,
- Fig. 2: den Gegenstand der Fig. 1 mit teilweise gebrochener Kennfadenlitze,
- Fig. 3: eine Kronensicherung mit Hilfe eines Seils, wie es u. a. aus den Figuren 1 und 2 ersichtlich ist,
- Fig. 4: eine weitere Ausführungsform in den Figuren 1 und 2 entsprechender Darstellung und
- Fig. 5: eine dritte Ausführungsform in abgebrochener Darstellung und in Draufsicht.
- Fig. 6: in den Figuren 1 und 2 entsprechender Darstellung eine als Hohlseil ausgeführte Ausführungsform.

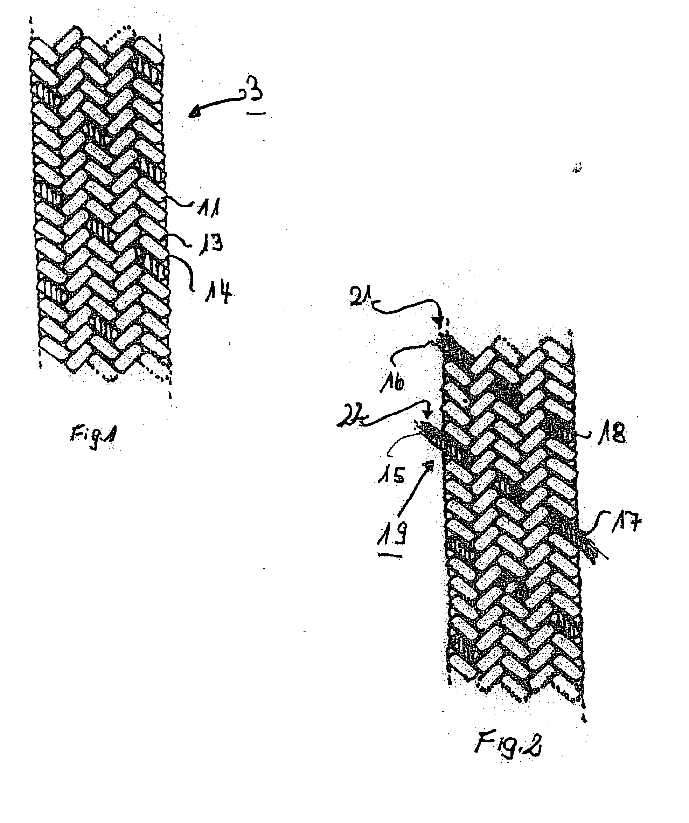

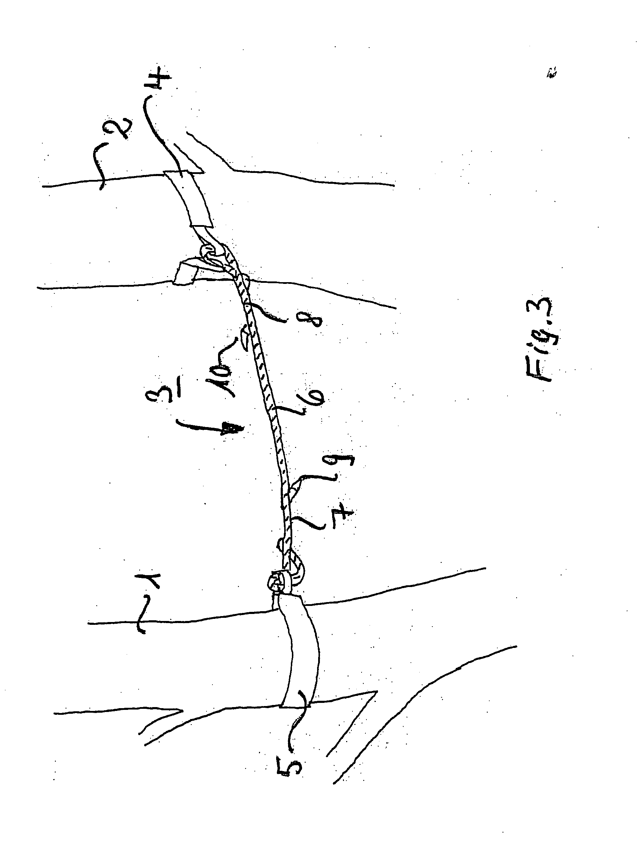

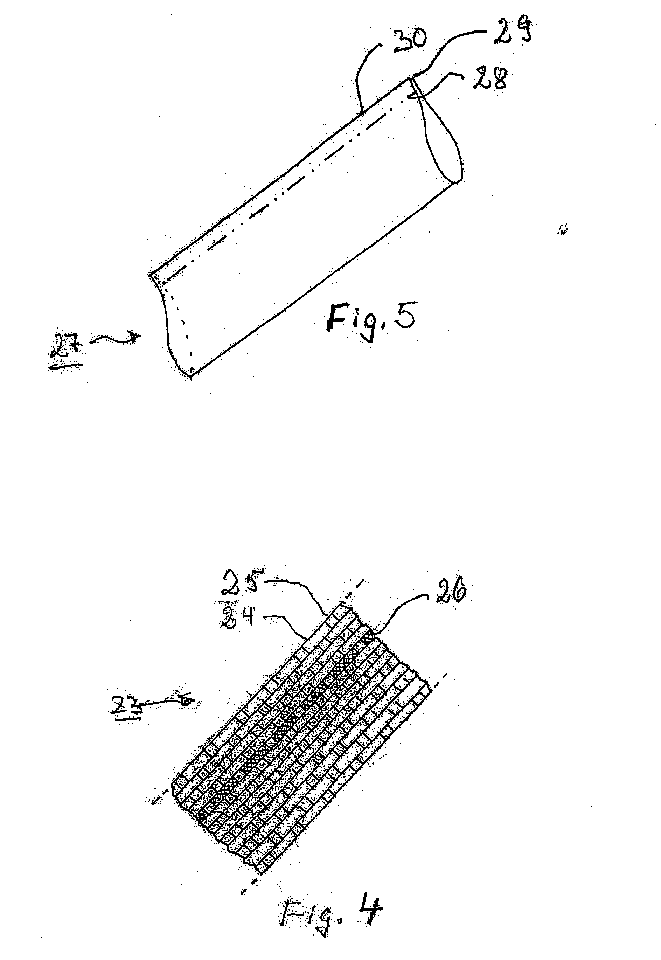

Gemäß der Darstellung in Fig. 3 sind benachbarte Äste 1 und 2 einer Baumkrone durch ein Sicherungsseil 3 gegen Bruch einer zugfesten gegenseitigen Verbindung gesichert. Sie besteht im wesentlichen aus je einer Manschette 4 und 5 sowie dem Seil 6, welches beiderseits durch die Enden der Manschnetten gezogen und bei 7 und 8 mit sich selbst verknotet oder gespleißt ist. Die Schnittflächen der Seilenden 9 und 10 sind gegen Aufdrehen ihrer Litzen gesichert. Als Sicherung kommen eine Verschweißung der Seilenden, aber auch eine Spleißung oder Umwicklung z. B. mit einem Klebeband (Tape) infrage.

Gemäß dem Ausführungsbeispiel handelt es sich um ein textiles Hohlseil, das aus Polyamid, Polyester, Dyneema o. ä. Werkstoff bestehen kann. Seine Litzen, von denen einige bei 11 bis 14 in Fig. 1 zu erkennen sind, bestehen aus miteinander verseilten Fäden. Die Litzen sind im Mantel des Hohlseils locker miteinander verflochten. Dadurch entsteht aus Naturoder Kunststofffasern, die in einer Vielzahl von Schraubenlinien um die Seilachse geschlagen sind, ein Faserseil, das in Längsrichtung eine verhältnismäßig große Nachgiebigkeit aufweist. Überträgt es bei Belastung Zugkräfte, tritt je nach Beanspruchung eine Längung unter gleichzeitigem Zusammenschnüren in Querrichtung ein.

Das Sicherungsseil 3 ist mit Kennfäden versehen, die bei der Zugkraftübertragung als sichtbarer Hinweis auf seine Belastungsgrenze dienen. Einige Kennfäden sind beispielsweise bei 15 und 16 in Fig. 2 dargestellt und zu mehreren Kennfadenlitzen 17 und 18 verdrillt (Fig. 3). Die Kennfadenlitzen sind ihrerseits zu mehreren miteinander verdrillt und bilden deswegen ein Kennfadenseil 19. Im Ausführungsbeispiel sind die Kennfäden 15 und 16 und damit das Kennfadenseil 19 beispielsweise schwarz und die Fäden der Seillitzen 11 bis 14 beispielsweise blau eingefärbt. Diese unterschiedliche Einfärbung der Litzen und des Kennfadenseils sorgt dafür, dass sich diese Teile aus größerer Entfernung mit dem mit bloßem Auge voneinander unterscheiden lassen.

Kennfäden 15, 16, die aus ihrer Verseilung entstandenen Kennfadenlitzen 17, 18 und damit auch das Kennfadenseil 19 bestehen aus Fäden vorzugsweise gleicher Provenienz und/oder Abmessung wie die Fäden der Seillitzen 11 bis 13. Das Sicherungsseil 3 ist jedoch so gearbeitet, dass die Kennfadenlitzen 17, 18 bzw. das Kennfadenseil 19 bei einer entsprechenden Zugbelastung des Sicherungsseiles zuerst und dann erst das Sicherungsseil selbst reißt. Zu diesem Zweck ist gemäß dem Ausführungsbeispiel das Kennfadenseil aus einem Material gearbeitet, welches eine geringere Dehnung als das Sicherungsseil aufweist. Das lässt sich durch eine entsprechende Bemessung der beiden Seile, aber auch damit erreichen, dass Seile unterschiedlicher Provenienz Verwendung finden. Die Schraubenlinie des Sicherungsseiles weist die gleiche Steigung um die Seilachse 20 wie die Litzen des Kennfadenseiles auf, das mit dem Mantel des Sicherungsseiles 3 verflochten ist. Bei zunehmender Belastung des Sicherungsseiles kann die Zugbelastung des Kennfadenseils so groß werden, dass es an mehreren Stellen nacheinander oder gleichzeitig reißt. Wenn das geschieht, sorgt die lockere Verbindung des Kennfadenseils mit dem Mantel des Sicherungsseils dafür, dass wenigstens eines der Bruchenden, gemäß dem Ausführungsbeispiel der Fig. 2 mehrere Bruchenden 21, 22 aufspießen. Sie stehen dann nach außen über den Seilmantel vor und lassen die unmittelbar bevorstehenden Bruchbelastungen des Sicherungsseiles 3 erkennen.

Abweichend von dem dargestellten Ausführungsbeispiel können die Seil- und Kennfäden außer unterschiedlicher und/ oder gleicher Provenienz auch unterschiedliche Stärke aufweisen. Schließlich kann die Konstruktion der Kennfäden oder des Kennfadenseils, d. h. die Machart der beiden Seile so gewählt werden, dass die Bruchlast der Kennung prozentual geringer als die Bruchlast des Sicherungsseils ausfällt.

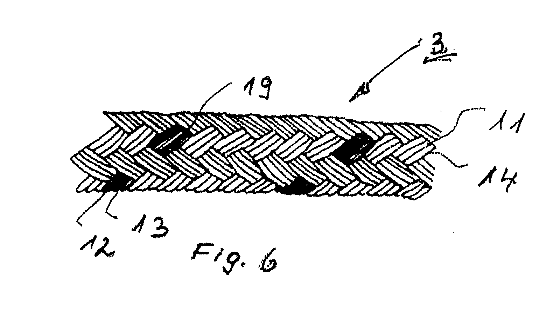

Bei der Ausführungsform nach Fig. 4 handelt es sich um ein Sicherungsseil in Form eines flachen Gurtes 23, der aus Schuss- und Kettfäden 24, 25 gewebt ist. Dieser Gurt ist in Längsrichtung des eingewebten Kennfadens 26 auf Zug belastbar und entspricht deswegen dem vorstehend beschriebenen Seil.

Das Ausführungsbeispiel der Fig. 5 verwendet ebenfalls einen flachen Gurt 27. Dieser ist um die Längsachse auf sich selbst zurück gefaltet. Seine beiden Hälften sind parallel zu den Längskanten 29, 30 des Gurtes 27 durch einen Kennfaden 28 miteinander vernäht bzw. verwebt.

Für die beiden Ausführungsbeispiele der Fig. 4 und 5 gelten im übrigen die selben Möglichkeiten, die eingangs beschrieben sind, um bei Zugbelastung des Sicherungsgurtes den Kennfaden 26 bzw. 28 bei einer geringeren Last als der Bruchlast des Sicherungsgurtes 23 bzw. 27 zerreißen zu lassen.

Bei der Ausführungsform nach Fig. 6 handelt es sich wie schon in den Ausführungsformen der Fig. 1 und 2 um ein Hohlseil, das aus textilen Fasern besteht. Diese sind zu einzelnen Litzen (11 bis 14) verdrillt, welche paarweise nebeneinander angeordnet Schraubenlinien gleicher Steigung folgend im Seilmantel miteinander verflochten sind. Die Schraubenlinien weisen im Wesentlichen gleiche Steigungen auf.

Zwei der nebeneinander angeordneten Litzen 12, 13 sind gegenüber den übrigen Litzen 11 und 14 unterschiedlich beispielsweise blau eingefärbt, während die anderen Seillitzen 11, 14 beispielsweise schwarz erscheinen. An dieser Farbgebung erkennt der Fachmann den Werkstoff des Seiles. Dafür kommen u. a. Polyamid und Polyester in frage.

Das Kennfadenseil 19 besteht lediglich seinerseits aus miteinander verdrillten Fäden, die jedoch eine dritte Farbgebung beispielsweise weiß aufweisen. Dadurch sind sie schon aus der Ferne einerseits durch ihre Farbe andererseits durch das bei Überschreiten ihrer Bruchlast auftretende Aufspießen aus dem Steilmantel zu erkennen, bevor das Sicherungsseil 3 reißen kann.

Das Kennfadenseil 19 hat im Wesentlichen den gleichen Durchmesser wie jede der Seillitzen 11, 14 des Sicherungsseiles. Es liegt zwischen benachbarten Seillitzenpaaren, wie sich unmittelbar aus der Darstellung ergibt. Es ist daher wie jede der Seillitzen 11, 14 belastet, ohne seinerseits diese zu beanspruchen. Hierdurch ist eine einwandfreie Funktion als Frühindikator der Seilüberlastung gewährleistet.

## Patentansprüche

1. Seil zur Sicherung von Bäumen o. dgl. **gekennzeichnet durch** wenigstens einen Kennfaden (15, 16), der bei der Zugkraftübertragung als sichtbarer Hinweis (21, 22) auf die Belastungsgrenze dient.

2. Seil nach Anspruch 1, **dadurch gekennzeichnet, dass** der Kennfaden (15, 16) durch vorzeitigen Bruch auf die Belastungsgrenze hinweist.

3. Seil nach den Ansprüchen 1 oder 2, **dadurch gekennzeichnet, dass** der Kennfaden (15, 16) durch unterschiedliche Farbgebung sichtbar ist.

4. Seil nach Anspruch 1 und einem oder mehreren der Ansprüche 2 oder 3, **dadurch gekennzeichnet, dass** der Kennfaden (15, 16) bei Bruch aus dem Seilmantel an einer oder mehreren Stellen (21, 22) nach außen spießt.

5. Seil nach Anspruch 1 und einem oder mehreren der Ansprüche 2 bis 4, **dadurch gekennzeichnet, dass** mehrere Kennfäden (15, 16) zu mehreren Kennfadenlitzen (17, 18) eines oder mehrerer Kennfadenseile (19) zusammengedreht sind.

6. Seil nach Anspruch 1 und einem oder mehreren der Ansprüche 2 bis 4, **dadurch gekennzeichnet, dass** das oder die Kennfadenseile (19) in einer oder mehreren Schraubenlinien um die Seilachse (23) geschlagen ist.

7. Seil nach Anspruch 1 und einem oder mehreren der Ansprüche 2 bis 5, **dadurch gekennzeichnet, dass** das oder die Kennfadenseile (19) neben den Seillitzen (17, 18) angeordnet und in gleicher Richtung mit größerer Steigung um die Seilachse (23) geschlagen sind.

8. Seil nach Anspruch 1 und einem oder mehreren der Ansprüche 1 bis 6, **dadurch gekennzeichnet, dass** das oder die Kennfadenseile (19) mit den Seillitzen (11, 13, 14) verflochten ist.

9. Seil nach Anspruch 1 und einem oder mehreren der Ansprüche 2 bis 8, **dadurch gekennzeichnet, dass** seine Litzen einschließlich der Kennfäden und/oder Kennlitzen aus textilem Material bestehen.

10. Seil nach Anspruch 1 und einem oder mehreren der folgenden Ansprüche, **gekennzeichnet durch** die Machart als flacher Gurt (23, 27) aus gewebten Sicherungsfäden (24, 25) und eingewebten oder vernähtem(n) Kennfaden bzw. Kennfäden (26, 28).

11. Seil nach Anspruch 1 und einem oder mehreren der folgenden Ansprüche, **dadurch gekennzeichnet, dass** der Sicherungsgurt bzw. das Sicherungsseil (23, 27) um die Längsachse auf sich selbst zurück gefaltet und die beiden Hälften parallel zu den Längskanten (29, 30) miteinander verwebt oder vernäht sind.

12. Sicherungsseil nach einem oder mehreren der vorausgehenden Ansprüche, **gekennzeichnet durch** ein textiles Hohlseil (6), das als ein aus Litzen (11, 14) geflochtenes Faserseil ausgebildet ist und in dem ein aus zusammen gedrehten Kennfäden bestehendes Kennfadenseil (19) um die Seilachse in einer Schraubenlinie und in gleicher Richtung wie die Seillitzen (11, 14) geschlagen ist.

13. Sicherungsseil nach einem oder mehreren der vorausgehenden Ansprüche, **dadurch gekennzeichnet, dass** das Kennfadenseil (19) eine der Litzen des Hohlseils bildet und zwischen den paarweise angeordneten Litzen (11, 14) des Hohlseils verflochten ist.

14. Sicherungsseil nach einem oder mehreren der vorausgehenden Ansprüche, **dadurch gekennzeichnet, dass** sich wenigstens eine oder mehrere Hohlseillitzen (11, 14) farblich von den übrigen Hohlseillitzen unterscheiden.

15. Sicherungsseil nach einem oder mehreren der vorausgehenden Ansprüche, **dadurch gekennzeichnet, dass** die farblich von der Mehrzahl der Hohlseillitzen unterschiedenen Hohlseillitzen sich ihrerseits von der Farbe der Seillitzen (15, 16) des Kennfadenseils (19) unterscheiden.

16. Sicherungsseil nach einem der mehreren der vorausgehenden Ansprüche, **dadurch gekennzeichnet, dass** seine Seilenden (9, 10) gegen Aufdrehen ihrer Litzen (11, 14, 15, 16) gesichert und an den der Seilverbindung dienenden Manschetten (7, 8) mit dem Seil (3) verspleißt sind.
